**Europäisches Patentamt**

**European Patent Office**

**Office européen des brevets**

(19)

(11) Veröffentlichungsnummer: **0 086 790**
**B1**

(12) **EUROPÄISCHE PATENTSCHRIFT**

(45) Veröffentlichungstag der Patentschrift:
**08.01.86**

(51) Int. Cl.⁴: **G 03 B 35/22**, G 03 B 37/00

(21) Anmeldenummer: **82902434.8**

(22) Anmeldetag: **23.08.82**

(86) Internationale Anmeldenummer:
**PCT/CH 82/00099**

(87) Internationale Veröffentlichungsnummer:
**WO 83/00749 (03.03.83** Gazette 83/6)

(54) **EINRICHTUNG ZUR PROJEKTION VON STEREOSKOPISCHEN, ANAMORPHOTISCH KOMPRIMIERTEN BILDPAAREN AUF EINE SPHÄRISCH GEKRÜMMTE BREITWANDFLÄCHE.**

(30) Priorität: **24.08.81 CH 5452/81**
**23.09.81 CH 6177/81**
**05.08.82 CH 4725/82**

(43) Veröffentlichungstag der Anmeldung:
**31.08.83 Patentblatt 83/35**

(45) Bekanntmachung des Hinweises auf die Patenterteilung:
**08.01.86 Patentblatt 86/2**

(84) Benannte Vertragsstaaten:
**AT BE CH DE FR GB LI LU NL SE**

(56) Entgegenhaltungen:
**CA - A - 980 750**
**FR - A - 398 746**
**FR - A - 1 108 831**
**US - A - 2 810 323**
**US - A - 3 425 775**

(73) Patentinhaber: **MEIER, Walter, Stöckenstrasse 29,**
**CH-8903 Birmensdorf (CH)**

(72) Erfinder: **MEIER, Walter, Stöckenstrasse 29,**
**CH-8903 Birmensdorf (CH)**
Erfinder: **JACOBSEN, Jan, Ludwig Rif Strasse,**
**D-8901 Reutern (DE)**

(74) Vertreter: **Frei, Alexandra Sarah et al, c/o Punschke und**
**Frei Patentanwälte Hedwigsteig 6 Postfach,**
**CH-8029 Zürich (CH)**

**Beschreibung**

Die Erfindung liegt im Gebiet der optischen Abbildung und betrifft eine Einrichtung zur Projektion von stereoskopischen, komprimierten Bildpaaren auf eine gekrümmte Breitwandfläche, enthaltend eine Beleuchtungseinrichtung, eine Bildbühne, zwei Projektionsobjektive und zwei Einrichtungen zur anamorphotischen Entzerrung der beiden Teilbilder.

Bei Filmaufführungen wird vielfach versucht, dem Betrachter den Eindruck zu vermitteln, er wäre in das lichtbildnerisch dargestellte Geschehen miteinbezogen. Die Attraktivität der möglichst wirklichkeitsnahen Darstellung eines meist optisch-dramatischen Ablaufs, wie beispielsweise auf den Betrachter zufliegende Gegenstände, abschüssige Fahrten, die den Betrachter zu mannigfaltigen Reaktionen veranlassen, haben zu zahlreichen technischen Lösungen auf diesem Gebiet geführt.

Sehr früh bemühte man sich, bei der kinematographischen Darstellung einen räumlichen Eindruck zu erzeugen. Im Jahre 1909 wurde durch die FR-A-398 746 ein Verfahren mit Vorrichtung bekannt, um eine plastische Bildwirkung zu erhalten. Dazu wurden auf einen Film aufgenommene stereoskopische Bildpaare durch zwei zueinander geneigte Projektionsobjektive möglichst exakt überlagert projiziert. Der vorgeschlagene Projektor arbeitet mit zwei getrennten Lichtquellen. In einer vereinfachten Version wird vorgeschlagen, das Licht aus einer Quelle auf beide Objektive gleichmässige zu verteilen. Die Lichtsausbeute war offensichtlich noch kein Thema.

Weiterhin wurde durch die US-A-3 425 775 ein neuer Stereoprojektor für Breitwandprojektion bekannt. Während es damals üblich war, die mittels Zylinderanamorphoten bei der Aufnahme komprimierten Bildpaare, bei der Projektion wieder durch Zylinderanamorphoten zu dekomprimieren, wurde bei diesem Projektor diese Technik verlassen. Es wurden zur Dekompression Prismenanamorphoten von Brewster-Typ verwendet. Die daraus entstehenden Vorteile sind bekannt.

Bei allen diesen Projektionen auf übergrosse Projektionsflächen tritt noch der Nachteil einer markantgeringen Lichtausbeute aus der Beleuchtungsvorrichtung auf. Dies hängt zu einem grossen Teil mit den Filtern zusammen, die einmal im Objektiv eines solchen Projektionsapparates angeordnet sind und mit den Polarisationsfiltern der Brille, die jeder Zuschauer trägt, in der ungefähr die Hälfte der Lichtausbeute pro Polarisationskanal verloren geht. Ausserdem sind die Projektionsflächen extrem gross, so dass die Bildausleuchtung nicht mehr als besonders gut zu bezeichnen ist. Man versuchte schon seit längerer Zeit, diesen Nachteil durch verstärkte Beleuchtungskörper zu überwinden. Nachteilig dabei ist, dass die Ausleuchtung eines stereoskopischen Bildpaares in der Filmebene ebenfalls Lichtverluste mit sich bringt.

Es ist Aufgabe der Erfindung, für die Wiedergabe von Weitwinkel-Stereobildern, bei der simultan die anamorphotische Dekompression durchgeführt wird, eine optische Einrichtung zu schaffen, die kleine Baulängen, wenig bewegliche Teile und für die Abbildung eine genügend hohe Lichtintensität aufweist. Ausserdem hat die Erfindung die Aufgabe, eine optische Einrichtung zu schaffen, die für die Projektion von stereoskopischen Bildpaaren auf eine sphärische Projektionsfläche geeignet ist. Ferner ist es Aufgabe der Erfindung, eine optische Einrichtung so auszugestalten, dass sie an normale handelsübliche Projektoren angeordnet werden kann.

Die Aufgabe wird gelöst, indem für jedes Teilbild eine eigene Lichtquelle mit je einem Ellipsoidspiegel vorgesehen ist, dass zur Ablenkung der Beleuchtungsachsen in jedem Strahlengang je ein erstes und ein zweites Ablenkprisma vorgesehen ist, und dass je ein afokales Vorsatzobjektiv zur verzerrungsfreien Weitwinkelprojektion in Lichtrichtung nach den beiden Einrichtungen zur anamorphotischen Entzerrung vorgesehen ist.

Die Erfindung wird nun anhand des in den beiden Figuren dargestellten Ausführungsbeispiels näher erläutert. Es zeigen:

Fig. 1 die Vorrichtung zur Beleuchtung von stereoskopischen Bildpaaren und

Fig. 2 das Vorsatzobjektiv zur Projektion von stereoskopischen Bildpaaren auf eine sphärische Breitwandfläche.

Wie schon erwähnt, kann mit dieser Einrichtung ein normaler handelsüblicher Kinoprojektor zu einer Projektionsvorrichtung für stereoskopische, anamorphotisch komprimierte Bildpaare auf extrem grosse, sphärisch gekrümmte Breitwandflächen aufgewertet werden. Das Problem besteht darin, die von den Lichtquellen abgegebene Energie im sichtbaren Spektrum möglichst quantitativ der Bildbühne zuzuführen und schliesslich die durchstrahlten Bildpaare anamorphotisch zu entzerren und bei genügender Lichtstärke auf die übergrosse Leinwand zu projizieren, also diese Leinwand voll auszuleuchten.

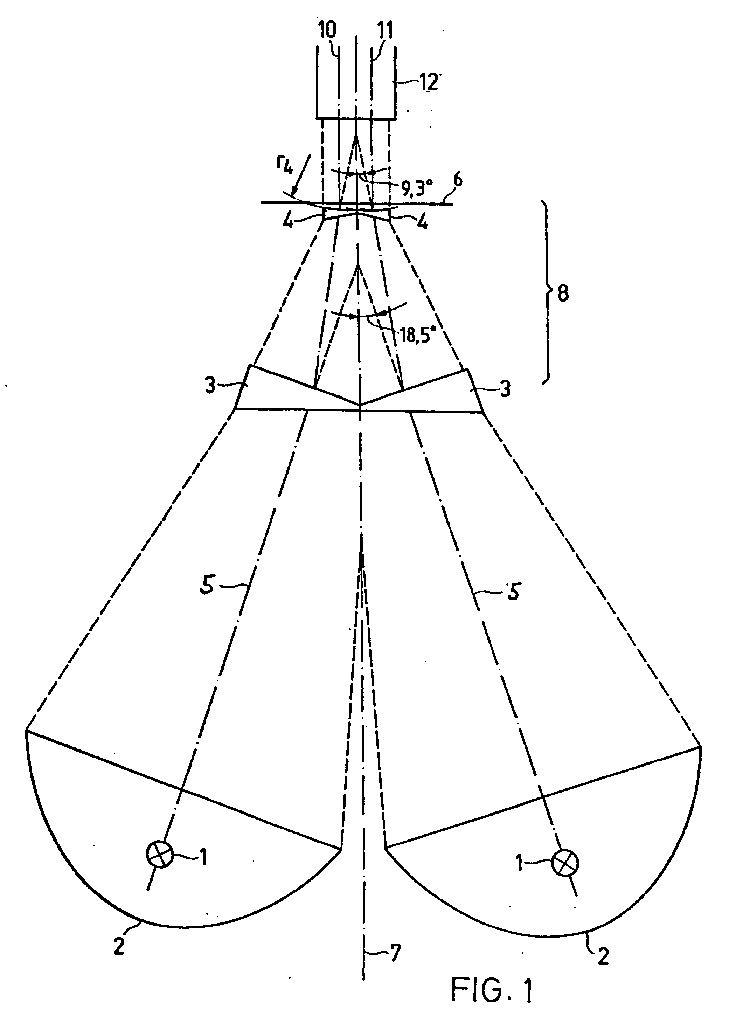

Fig. 1 zeigt in der Draufsicht die Beleuchtungsvorrichtung zur Beleuchtung von stereoskopischen Bildpaaren. Diese Vorrichtung besteht aus zwei Xenon-Hochdruckbogenlampen von z.B. je vier Kilowattleistung.

Jede dieser Bogenlampen ist von einem Ellipsoidspiegel 2 so umgeben, dass die Lichtstrahlen, wie gestrichelt angedeutet, in Richtung der optischen Achse 5 zum ersten Umlenkprisma 3 gelangen. Jeder der Ellipsoidspiegel besitzt die Brennweiten von im wesentlichen 60 mm und 540 mm. Der Durchmesser des Spiegels an seinem Rand beträgt ca. 280 mm. Die Figur zeigt ferner, dass die Bogenlampen 1 und Spiegel 2 symmetrisch zu einer Symmetrieebene 7 angeordnet sind. Der Winkel zwischen der Symmetrieebene 7 und den optischen Achsen 5 beträgt im vorliegenden Ausführungsbeispiel 18,5°C. Selbstverständlich kann der Winkel je nach räumlichen Dimensionen eines Ausführungsbeispiels sich von diesem angegebenen Winkelwert unterscheiden. Das erste Umlenkprisma kann aus Quarz mit einem Keilwinkel von 19,56° oder aus dem Material «ZK N7» mit einem Keilwinkel von 17,5° ausgeführt werden. Bei der Quarzausführung beträgt die Brechzahl für die Heliumlinie $n_d = 1,458$ und die Abbesche Zahl $v_d$ = ca. 67. Bei der Ausführung mit dem Material «ZK N7» beträgt die Brechzahl für die Heliumlinie $n_d$ = 1,5085 und Abbesche Zahl $v_d = 61,19$. Für jede der optischen Achsen ist ein erstes Umlenkprisma 3 vor-

2

gesehen. Die optische Achsenrichtung wird hierdurch auf einen Winkel von 9,3° zur Symmetrieebene 7 umgelenkt, was in der Zeichnung gestrichelt ist. Das Licht gelangt nun bereits eng gebündelt in den Bereich 8, der z.B. die mechanischen Blenden des Filmprojektors enthalten kann. Am Ende des Bereichs 8 befindet sich ein zweites Umlenkprisma 4, wobei für jede der optischen Achsen ein solches zweites Umlenkprisma vorgesehen ist. Dieses kann entweder aus Quarz mit der Brechzahl $n_d = 1,458$ oder der Abbeschen Zahl $v_d = 67$ oder aus dem Material «Tempax» mit der Brechzahl $n_d = 1,485$ und $v_d = $ ca. 62 bestehen.

Im zweiten Umlenkprisma 4 aus «Tempax» mit einem Keilwinkel von 18,2° wird unmittelbar vor der Filmebene 6 die optische Beleuchtungsachse parallel zur Symmetrieebene 7 gerichtet. Der Lichtkegel wird durch einen sphärischen Hohlschliff im zweiten Umlenkprisma gestreckt. Dieser sphärische Hohlschliff ist auf der Seite des zweiten Umlenkprismas 4 angebracht, die zur Projektionsoptik 12 zeigt. Der Radius des Hohlschliffes ist im vorliegenden Beispiel $r_4 = 146$ mm. Der optische Radius richtet sich nach der verwendeten Bogenlampe 1. In der Filmebene 6 wird das stereoskopische Bildpaar vollständig und optimal ausgeleuchtet. Beleuchtungsverluste treten nun nicht mehr auf.

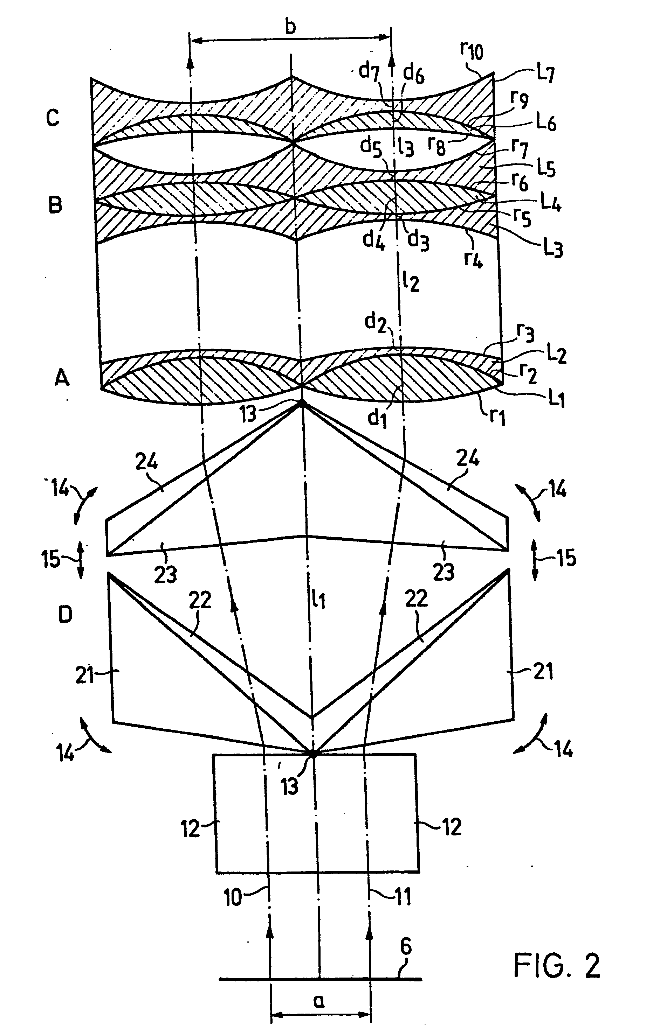

Fig. 2 zeigt nun in teilweiser Schnittdarstellung das nach der Grundoptik angeordnete Vorsatzobjektiv, welches mit der erfindungsgemässen Beleuchtungsvorrichtung optisch zusammenwirkt.

Auf den in der Bildebene 6 durchlaufenden Film ist das stereoskopische Bildpaar 10, 11 aufgezeichnet. Üblicherweise haben solche Filme eine Breite von 35 mm oder 70 mm. Der Mittenabstand an den beiden Bildern 10, 11 beträgt entweder die typischen 13 mm oder 26 mm. Hinter dem Film ist, wie beschrieben, die Beleuchtungsvorrichtung gemäss Fig. 1 angeordnet. In der Zeichnung sind die optischen Achsen für die beiden Bilder 10, 11 strichpunktiert gezeichnet. Für jedes Bild ist ein sogenanntes Grundobjektiv 12 für die Projektion vorgesehen, wobei dieses Grundobjektiv optisch als dem auszurüstenden Projektor zugehörig betrachtet werden kann. Jedem dieser Grundobjektive 12 schliesst sich ein erstes Prismenpar 21, 22 an, das aus verschiedenen optischen Materialien besteht und die dargestellte Form hat. Die beiden Teilprismen 21, 22 sind miteinander verkittet. Hierdurch wird die optische Achse der Lichtstrahlen nach rechts und links abgelenkt. In Richtung der Lichtstrahlen folgt nun ein zweites Prismenpaar, das aus den Teilprismen 23, 24 besteht, die eine ähnlich bis gleiche Form und auch Wirkungsweise haben wie das erste Prismenpaar. Das zweite Prismenpaar 23, 24 ist im Abstand $l_1$ vom ersten Prismenpaar 21, 22 entfernt. Dieser Abstand kann entweder verlängert oder verkürzt werden, was durch den Doppelpfeil 15 angedeutet ist. Die Mechanismen zu einer solchen Verschiebung der Prismenpaare zueinander sind allgemein bekannt und werden hier nicht näher besprochen. Durch die Veränderung des Abstands $l_1$ zwischen den Prismenpaaren kann die Strecke b vergrössert oder verringert werden. Dies hängt von der Baubreite der nachfolgenden Linsenglieder A, B, C ab. Die Prismenpaare 21, 22 und 23, 24 können ausserdem in ihrem entsprechenden Drehpunkt 13 verschwenkt werden. Durch diese Verschwenkung, die mittels der Doppelpfeile 14 angedeutet ist kann die Konvergenz der auf die kugelförmige Projektionswand projizierten Stereobilder so eingestellt werden, dass sie ohne einen störenden optischen Eindruck die beste Stereowirkung zeigen.

Den in Fig. 2 dargestellten oberen Prismenpaaren 23, 24 folgt für jedes der beiden Stereobilder 10, 11 eine Anordnung aus drei Linsengliedern A, B, C. Diese Linsenglieder haben die gleichen Werte für jedes Bild bzw. für jeden Bildkanal. Daher sind die Bezugszahlen der verschiedenen konstruktiven Merkmale der Linsenglieder nur für die rechte Anordnung gezeichnet. Die folgende Beschreibung und Tabelle gelten auch für die linke Anordnung. Das erste Glied ist positiv und besteht auch aus einer bikonvexen Linse $L_1$ und einer konkav/konvex geformten Linse $L_2$. Hieran schliesst sich ein Luftraum mit dem Abstand $l_2$. Das zweite Glied B hat eine negative Wirkung und besteht aus einer bikonkaven Linse $L_3$, bikonvexen Linse $L_4$ und bikonkaven Linse $L_5$. Das dritte Linsenglied C ist vom zweiten Linsenglied B durch einen Luftraum $l_3$ getrennt. Das dritte Linsenglied hat einen negativen Strahlengang und besteht aus einem Meniskus $L_6$ und aus einer bikonkav geformten Linse $L_7$. Es folgen nun die bekannten Polarisationsfilter, die nicht dargestellt sind. Das Stereobildpaar wird mit dem Basisabstand b auf die kugelförmige Projektionsfläche, die in Form einer Halbkugel aufgestellt ist, projiziert.

Es folgt nun die Tabelle der konstruktiven Daten des dargestellten Objektivs:

| | | | | $n_d$ | $v_d$ |
|---|---|---|---|---|---|
| Teilprisma 1 | | | | 1,622801 | 56,90 |
| Teilprisma 2 | | | | 1,620040 | 36,37 |
| gesamter Keilwinkel 14° | | | | | |
| Teilprisma 3 | | | | 1,622801 | 56,90 |
| Teilprisma 4 | | | | 1,620040 | 36,37 |
| gesamter Keilwinkel 17° | | | | | |
| A | $L_1$ | $r_1 = +89,05$ $r_2 = -80,50$ | $d_1 = 18$ | 1,620411 | 60,23 |
| | $L_2$ | $r_3 = -260,5$ | $d_2 = 2,3$ $l_2 = 31$ | 1,755201 | 27,58 |
| B | $L_3$ | $r_4 = -90$ $r_5 = +154$ | $d_3 = 3$ | 1,620411 | 60,23 |
| | $L_4$ | $r_6 = -154$ | $d_4 = 13$ | 1,755201 | 27,58 |
| | $L_5$ | $r_7 = +72$ | $d_5 = 3$ $l_3 = 19$ | 1,620411 | 60,23 |
| C | $L_6$ | $r_8 = -190$ $r_9 = -86$ | $d_6 = 6$ | 1,755301 | 27,58 |
| | $L_7$ | $r_{10} = +178$ | $d_7 = 3$ | 1,620411 | 60,23 |

In dieser Tabelle sind mit r die Radien und mit d die Dicken der einzelnen Linsen in mm angegeben. Ebenfalls sind die Dicken 1 der Lufträume in mm angegeben. Die Brechzahl $n_d$ bezieht sich auf die Helium-Linie. $v_d$ bezeichnet die Abbesche Zahl.

**Patentansprüche**

1. Optische Einrichtung zur Projektion von stereoskopischen, anamorphotisch komprimierten Bildpaaren auf eine gekrümmte Breitwandfläche, enthaltend eine Beleuchtungseinrichtung (1, 2), eine Bildbühne (6), zwei Projektionsobjektive (12) und zwei Einrichtungen (14, 15) zur anamorphotischen Entzerrung der beiden Teilbilder (10, 11), dadurch gekennzeichnet, dass für jedes Teilbild (10, 11), eine eigene Lichtquelle (1) mit je einem Ellipsoidspiegel (2) vorgesehen ist, dass zur Ablenkung der Beleuchtungsachsen (5) in jedem Strahlengang je ein erstes und ein zweites Ablenkprisma (3, 4) vorgesehen ist, und dass je ein afokales Vorsatzobjektiv (ABC) zur verzerrungsfreien Weitwinkelprojektion in Lichtrichtung nach den beiden Einrichtungen (14, 15) zur anamorphotischen Entzerrung vorgesehen ist.

2. Optische Einrichtung gemäss Anspruch 1, dadurch gekennzeichnet, dass jeder Ellipsoidspiegel (2) ein Verhältnis von ca. 1 : 9 zwischen grosser und kleiner Brennweite aufweist.

3. Optische Einrichtung gemäss Anspruch 1, dadurch gekennzeichnet, dass die Sektorblende des Projektors zwischen dem ersten und zweiten Ablenkprisma (3, 4) angeordnet ist.

4. Optische Einrichtung gemäss Anspruch 1, dadurch gekennzeichnet, dass das zweite Umlenkprisma (4) an der dem Projektionsobjektiv (12) zugeordneten Seite einen sphärischen Hohlschliff aufweist.

5. Optische Einrichtung gemäss Anspruch 1, dadurch gekennzeichnet, dass der Ellipsoidspiegel (2) Brennweiten von 60 mm und 540 mm und einen Durchmesser am Rand von 280 mm aufweist.

6. Optische Einrichtung gemäss Anspruch 1, dadurch gekennzeichnet, dass das erste Umlenkprisma (3) aus Quarz mit einer Brechzahl $n_d = 1,458$ und einer Abbeschen Zahl $v_d$ von ca. 67 oder aus ZK N7-Material mit einer Brechzahl $n_d = 1,5085$ und einer Abbeschen Zahl $v_d = 61,19$ und das zweite Umlenkprisma (4) aus Quarz mit einer Brechzahl $n_d = 1,458$ und einer Abbeschen Zahl $v_d$ von ca. 67 oder aus Tempax-Material mit einer Brechzahl $n_d = 1,485$ und einer Abbeschen Zahl $v_d$ von ca. 62 besteht, wobei der Hohlschliff einen Radius $r_4 = 146$ aufweist.

7. Optische Einrichtung gemäss Anspruch 1, dadurch gekennzeichnet, dass die Einrichtung zur anamorphotischen Entzerrung ein erstes und ein zweites Prismenpaar (21, 22, 23, 24) aufweist, die durch einen veränderbaren Abstand (11) voneinander getrennt sind, wobei mindestens ein Prismenpaar um einen Drehpunkt (13) verschwenkbar ist.

8. Optische Einrichtung gemäss Anspruch 1, dadurch gekennzeichnet, dass das Vorsatzobjektiv (A, B, C) ein erstes positives Linsenglied (A), bestehend aus zwei miteinander verkitteten Linsen ($L_1$, $L_2$), die in der Reihenfolge des Lichtdurchtritts bikonvex und konkav/konvex geformt sind; ein zweites, negatives Linsenglied (B), bestehend aus drei miteinander verkitteten Linsen ($L_3$, $L_4$, $L_5$), die in der Reihenfolge des Lichtdurchtritts bikonkav, bikonvex und bikonkav geformt sind; und ein drittes, negatives Linsenglied (C), bestehend aus einem Meniskus ($L_6$) und einer Linse ($L_7$), die in der Reihenfolge des Lichtdurchtritts konkav/konvex und bikonkav geformt sind, aufweist.

9. Optische Einrichtung gemäss Anspruch 7, gekennzeichnet durch folgende Eigenschaften der Baugruppen, das erste Prismenpaar (21, 22) ist achromatisch und besteht aus zwei verkitteten Teilprismen (1, 2) mit den Daten:

Teilprisma 21    $n_d = 1,622801$    $v_d = 56,90$
Teilprisma 22    $n_d = 1,620040$    $v_d = 36,37$
und hat einen Prismenwinkel von 14°;

das zweite Prismenpaar (23, 24) ist achromatisch und besteht aus zwei verkitteten Teilprismen (13, 14) mit den Daten:

Teilprisma 23    $n_d = 1,622801$    $v_d = 56,90$
Teilprisma 24    $n_d = 1,620040$    $v_d = 36,37$
und hat einen Brechwinkel von 17°.

10. Optische Einrichtung nach Anspruch 8, gekennzeichnet durch folgende optische Daten:

|   |   |   |   | $n_d$ | $v_d$ |
|---|---|---|---|---|---|
| A | $L_1$ | $r_1 = +89,05$ $r_2 = -80,50$ | $d_1 = 18$ | 1,620411 | 60,23 |
|   | $L_2$ | $r_3 = -260,5$ | $d_2 = 2,3$ $l_2 = 31$ | 1,755201 | 27,58 |
| B | $L_3$ | $r_4 = -90$ $r_5 = +154$ | $d_3 = 3$ | 1,620411 | 60,23 |
|   | $L_4$ | $r_6 = -154$ | $d_4 = 13$ | 1,755201 | 27,58 |
|   | $L_5$ | $r_7 = +72$ | $d_5 = 3$ $l_3 = 19$ | 1,620411 | 60,23 |
| C | $L_6$ | $r_8 = -190$ $r_9 = -86$ | $d_6 = 6$ | 1,755301 | 27,58 |
|   | $L_7$ | $r_{10} = +178$ | $d_7 = 3$ | 1,620411 | 60,23 |

**Claims**

1. An optical device for projecting stereoscopic, anamorphotically condensed image pairs on a curved wide screen comprising an illumination device (1, 2), a filme-plane (6), two projection objectives (12) and two devices (14, 15) for anamorphotic distortion correction of the two partial image (10, 11) characterised in that for each partial images (10, 11) there is an individual light source (1) with a respective ellipsoidal mirror (2), in that in each light path first and second deflecting prisms (3, 4) are provided for deflecting the illumination axes (5), and in that respective afocal auxiliary lenses (ABC) are provided for distortion-free wide-angle projection, the auxiliary lenses being provided after the two devices (14, 15) for anamorphotic distortion correction considered in the direction of light transmission.

2. An optical device according to claim 1, characterised in that in each ellipsoidal mirror (2) the relationship between the larger and smaller focal lengths is approximately 1 : 9.

3. An optical device according to claim 1, characterised in that the sector diaphragm of the projector is arranged between the first and the second deflecting prism (3, 4).

4. An optical device according to claim 1, characterised in that the second deflecting prism (4) is ground spherically concave on the side facing the projection objective (2).

5. An optical device according to claim 1, characterised in that the ellipsoidal mirror (2) has focal lengths of 60 mm and 540 mm and a diameter at its periphery of 280 mm.

6. An optical device according to claim 1, characterised in that the first deflecting prism (3) is of quartz with a refracture index $n_d = 1,458$ and an Abbé refracture index $v_d$ of approximately 67 or is of ZK N7 material with a refractive index $n_d = 1,05085$ and an Abbé refracture index $v_d = 61,19$, and the second deflecting prism (4) is of quartz with a refractive index $n_d = 1,458$ and an Abbé refractive index $v_d$ of approximately 67 or is of Tempax material with a refractive index $n_d = 1,458$ and an Abbé refractive index of approximately 62, the concavity having a radius $r_4 = 146$.

7. An optical device according to claim 1, characterised in that the device for anamorphotic distortion correction comprises a first and second prism pair (21, 22, 23, 24), separated from each other by a variable spacing (11), at least one prism pair being rotatable about a pivot point (13).

8. An optical device according to claim 1, characterised in that the auxiliary objective (ABC) comprises a first, positive lens member (A), which consists of two lenses ($L_1$, $L_2$) cemented together and formed as biconvex and concave/convex lenses in the sequence of light transmission; a second, negative lens member (B), which consists of three lenses ($L_3$, $L_4$, $L_5$) cemented together and formed as biconcave, biconvex and biconcave lenses in the sequence of light transmission; and a third, negative lens member (C), which consists of a meniscus ($L_6$) and a lens ($L_7$) formed concave/convex and biconcave in the sequence of light transmission.

9. Optical device according to claim 7, characterised by the following characteristics of the members thereof;

the first prism pair (21, 22) is achromatic and consists of two prism elements (1, 2) cemented together and having the characteristics:

prism element 21   $n_d = 1,622801$      $v_d = 56,90$
prism element 22   $n_d = 1,620040$      $v_d = 36,37$

the first prism pair having a prism angle of 14 degrees;

the second prism pair (23, 24) is achromatic and consists of two prism elements (23, 24) cemented together and having the characteristics:

prism element 23   $n_d = 1,622801$      $v_d = 56,90$
prism element 24   $n_d = 1,620040$      $v_d = 36,37$

the second prism pair having an angle of refraction of 17 dregrees.

10. Optical device according to claim 8 characterised by the following optical data:

| | | | | $n_d$ | $v_d$ |
|---|---|---|---|---|---|
| A | $L_1$ | $r_1 = +89,05$ $r_2 = -80,50$ | $d_1 = 18$ | 1,620411 | 60,23 |
| | $L_2$ | $r_3 = -260,5$ | $d_2 = 2,3$ $l_2 = 31$ | 1,755201 | 27,58 |
| B | $L_3$ | $r_4 = -90$ $r_5 = +154$ | $d_3 = 3$ | 1,620411 | 60,23 |
| | $L_4$ | $r_6 = -154$ | $d_4 = 13$ | 1,755201 | 27,58 |
| | $L_5$ | $r^7 = +72$ | $d_5 = 3$ $l_3 = 19$ | 1,620411 | 60,23 |
| C | $L_6$ | $r_8 = -190$ $r_9 = -86$ | $d_6 = 6$ | 1,755301 | 27,58 |
| | $L_7$ | $r_{10} = +178$ | $d_7 = 3$ | 1,620411 | 60,23 |

**Revendications**

1. Dispositif optique pour la projection de couples d'images stéréoscopiques comprimés anamorphotiquement sur une surface de grand écran courbe, comprenant un dispositif d'éclairage (1, 2), une scène à image (6) deux objectifs de projection (12) et deux dispositifs (14, 15) pour la correction anamorphotique de la distorsion des deux images partielles (10, 11), caractérisé en ce qu'il comprend, pour chaque image partielle, (10, 11) une source lumineuse (1) associée à un miroir ellipsoïdal (2), en ce qu'il comprend, pour la déviation des axes d'éclairage (5), sur chaque trajet de rayons, un premier et un deuxième prisme de déviation (3, 4) et en ce qu'il comprend, pour la correction anamorphotique de la distorsion, un objectif additionnel afocal (ABC) pour la projection grand-angulaire sans distorsion dans le sens de la lumière vers les deux dispositifs (14, 15).

2. Dispositif optique selon la revendication 1, caractérisé en ce que, pour chaque miroir ellipsoïdal (2), le rapport entre la grande et la petite distance focale est de 1 : 9 environ.

3. Dispositif optique selon la revendication 1, caractérisé en ce que le diaphragme à secteurs de projecteur est intercalé entre le premier et le deuxième prisme de déviation (3, 4).

4. Dispositif optique selon la revendication 1, caractérisé en ce que le deuxième prisme de déviation (4) comporte, du côté correspondant à l'objectif de projection (12), une surface polie concave sphérique.

5. Dispositif optique selon la revendication 1, caractérisé en ce que le miroir ellipsoïdal (2) a des distances focales de 60 mm et 540 mm et un diamètre au niveau de son bord de 280 mm.

6. Dispositif optique selon la revendication 1, caractérisé en ce que le premier prisme de déviation (3) est constitué par du quartz ayant un indice de réfraction de 1,458 et un indice d'Able de 67 environ ou par une matière ayant un indice de réfraction de 1,5085 et un indice d'Able de 61,19 et en ce que le deuxième prisme de déviation (4) est constitué par du quartz ayant un indice de réfraction de 1,458 et un indice d'Able de 67 environ ou par une matière tempax ayant un indice de réfraction de 1,485 et un indice d'Able de 62 environ, la surface polie concave ayant un rayon $R^4 = 146$.

7. Dispositif optique selon la revendication 1, caractérisé en ce que le dispositif assurant la correction anamorphotique de la distorsion comporte un premier et un deuxième couple de prismes (21, 22, 23, 24) qui sont séparés l'un de l'autre par une distance variable (11), l'un au moins des couples de prismes pouvant pivoter autour d'un centre de rotation (13).

8. Dispositif optique selon la revendication 1, caractérisé en ce que l'objectif additionnel (A, B, C) comprend un premier système de lentilles positif (A) constitué par deux lentilles ($L_1$, $L_2$), collées l'une à l'autre, qui, dans le sens du passage de la lumière, sont, l'une biconvexe et, l'autre, concave/convexe, un deuxième système de lentilles négatif (B) constitué par trois lentilles ($L_3$, $L_4$, $L_5$), collées les unes aux autres, qui, dans le sens du passage de la lumière, sont biconcave, biconvexe et biconcave, et un troisième système de lentilles négatif (c) constitué par un ménisque ($L_6$) et une lentille ($L_7$) qui, dans le sens du passage de la lumière, sont concave/convexe et biconcave.

9. Dispositif optique selon la revendication 7, caractérisé par le fait que les groupes d'éléments optiques ont les propriétés suivantes:

le premier couple de prismes (21, 22) est achromatique et est constitué par deux prismes partiels collés (21, 22) ayant les particularités suivantes:

prisme partiel 21: indice de réfraction 1,622801, indice d'Able 56,90;
prisme partiel 22: indice de réfraction 1,620040, indice d'Able 36,37;

l'angle du prisme étant de 14 degrès.

Le deuxième couple de prismes (23, 24) est achromatique et est constitué par deux prismes partiels collés (23, 24) ayant les particularités suivantes:

prisme partiel 23: indice de réfraction 1,622801, indice d'Able 56,90;
prisme partiel 24: indice de réfraction 1,620040, indice d'Able 36,37;

l'angle du prisme étant de 17 degrès.

10. Dispositif optique selon la revendication 8, caractérisé par les particularités optiques suivantes:

|   |       |                  |                        | $n_d$     | $v_d$ |
|---|-------|------------------|------------------------|-----------|-------|
| A | $L_1$ | $r_1 = +89{,}05$<br>$r_2 = -80{,}50$ | $d_1 = 18$ | 1,620411 | 60,23 |
|   | $L_2$ | $r_3 = -260{,}5$ | $d_2 = 2{,}3$<br>$l_2 = 31$ | 1,755201 | 27,58 |
| B | $L_3$ | $r_4 = -90$<br>$r_5 = +154$ | $d_3 = 3$ | 1,620411 | 60,23 |
|   | $L_4$ | $r_6 = -154$ | $d_4 = 13$ | 1,755201 | 27,58 |
|   | $L_5$ | $r^7 = +72$ | $d_5 = 3$<br>$l_3 = 19$ | 1,620411 | 60,23 |
| C | $L_6$ | $r_8 = -190$<br>$r_9 = -86$ | $d_6 = 6$ | 1,755301 | 27,58 |
|   | $L_7$ | $r_{10} = +178$ | $d_7 = 3$ | 1,620411 | 60,23 |

FIG. 1

FIG. 2